# EUROPÄISCHE PATENTSCHRIFT

(11) **EP 2 760 596 B1**
(45) Veröffentlichungstag und Bekanntmachung des Hinweises auf die Patenterteilung: **28.10.2015**
(21) Anmeldenummer: 12769358.8
(22) Anmeldetag: 24.09.2012
(51) Int. Cl.: B07C 5/36

(54) **SORTIERVORRICHTUNG ZUM SORTIEREN VON STÜCKGÜTERN**
SORTING APPARATUS FOR SORTING PIECE GOODS
DISPOSITIF DE TRI DESTINÉ À TRIER DES ARTICLES INDIVIDUELS

(30) Priorität: 30.09.2011 DE 102011083882
(43) Veröffentlichungstag der Anmeldung: 06.08.2014
(73) Patentinhaber: Siemens Aktiengesellschaft, 80333 München (DE)
(72) Erfinder: TANZ, Torsten, 78247 Hilzingen (DE); VITALINI, Michele, 90475 Nürnberg (DE)
(86) Internationale Anmeldenummer: PCT/EP2012/068727
(87) Internationale Veröffentlichungsnummer: WO 2013/045375

(56) Entgegenhaltungen:
- WO-A1-01/10574
- DE-A1-102007 040 859
- US-B1- 6 762 382

## Beschreibung

Die Erfindung betrifft eine Sortiervorrichtung zum Sortieren von Stückgütern, mit zumindest einer ersten beweglichen Transporteinheit zum Transport wenigstens eines Stückguts in einer Haupttransportrichtung, wobei die erste Transporteinheit ein Fahrwerk für die Bewegung in der Haupttransportrichtung, eine Übergabeeinheit, die dazu vorgesehen ist, bei einem Übergabevorgang das Stückgut in einer von der Haupttransportrichtung abweichenden Übergaberichtung zu bewegen, und eine mit der ersten Transporteinheit festen Antriebseinheit aufweist, die zum Antreiben des Stückguts in der Übergaberichtung vorgesehen ist, wie beispielsweise aus WO-A-01/10574, US-A-6.762.382 oder DE-A-10 2007 040 859 bekannt.

Es sind Sortiervorrichtungen bekannt, bei welchen eine Kette von gekoppelten Transporteinheiten entlang einer Förderstrecke, insbesondere einer geschlossenen Umlaufstrecke, mittels eines statischen, zentralen Antriebs gefördert wird. Linearantriebe, Reibräder oder Kettensysteme entsprechen herkömmlichen Ausführungen eines derartigen zentralen Antriebs. Jede Transporteinheit verfügt ferner über eine lokale Antriebseinheit, mittels welcher eine Übergabeeinheit, die z.B. ein Gurtelement aufweist, für einen Einschleus- bzw. Ausschleusvorgang angetrieben werden kann.

Die oben genannten zentralen Antriebe rufen nachteilhafte Forderungen in Bezug auf die geometrische und funktionelle Gestaltung der Sortiervorrichtung hervor. Insbesondere ist die Bereitstellung eines erheblichen Bauraums erforderlich. Ferner sind diese Sortiervorrichtungen im Hinblick auf den Energiebedarf kostenintensiv.

Der Erfindung liegt die Aufgabe zugrunde, eine gattungsgemäße Sortiervorrichtung bereitzustellen, durch welche eine kompakte Bauweise und geringe Betriebskosten erreicht werden können.

Hierzu wird vorgeschlagen, dass die Sortiervorrichtung eine Kupplungseinrichtung aufweist, die dazu vorgesehen ist, zumindest für eine Zeitspanne das Fahrwerk mit der Antriebseinheit zu koppeln. Hierdurch kann zumindest weitestgehend, insbesondere vollständig auf einen zentralen Antrieb zum Antreiben der Transporteinheit verzichtet werden. Somit kann ein erheblicher Teil des herkömmlich notwendigen Bauraums eingespart werden. Durch ein vorteilhafterweise direktes Antreiben des Fahrwerks durch die lokale Antriebseinheit können Energieverluste, die bei der herkömmlichen Übertragung bzw. Umwandlung der von einer stationären Anlage erzeugten Antriebsenergie für die Fortbewegung der Transporteinheit in Haupttransportrichtung entstehen, weitestgehend vermieden werden.

Die Beweglichkeit der Transporteinheit wird relativ zu einem stationären Bezugssystem definiert, das fest mit dem Boden einer Sortieranlage ist. Die Bewegung der Transporteinheit erfolgt ferner zweckmäßigerweise relativ zu zumindest einer stationären Eingabestation und zumindest einer stationären Ausgabestation. Bei einem Übergabevorgang, der als Eingabevorgang oder Einschleusvorgang ausgebildet ist, wird ein Stückgut von der Eingabestation in einer Übergaberichtung auf eine vorbeifahrende Transporteinheit übergeben, wobei es anschließend in der Haupttransportrichtung mittels der Transporteinheit transportiert wird. Ein Ausgabe- oder Ausschleusvorgang ist ein weiterer Übergabevorgang der Sortiervorrichtung, bei welchem das Stückgut von der Transporteinheit in einer Übergaberichtung an die Ausgabestation übergeben wird, um von dort weiter gefördert zu werden.

Für die Bewegung der Transporteinheit in der Haupttransportrichtung weist das Fahrwerk zweckmäßigerweise zumindest Führungselemente, z.B. Führungsräder, die mit entsprechenden, stationären Führungselementen, z.B. Führungsschienen korrespondieren, und Fahrelemente auf, die - insbesondere über eine Antriebsachse - mit Antriebselementen der Antriebseinheit in Wirkverbindung stehen. Die Führungselemente und die Fahrelemente können zumindest teilweise von gleichen Bauteilen gebildet sein.

Unter einem "Koppeln" des Fahrwerks mit der Antriebseinheit soll insbesondere ein Vorgang verstanden werden, bei welchem die Antriebseinheit und das Fahrwerk antriebstechnisch miteinander gekoppelt werden. Hierbei ist das Fahrwerk mit dem Antriebsstrang der Antriebseinheit vorzugsweise derart verbunden, dass die hergestellte Verbindung eine Übertragung der durch die Antriebseinheit erzeugten Antriebsenergie auf das Fahrwerk ermöglicht, wobei durch diese Antriebsenergie z.B. ein zur Fortbewegung der Transporteinheit notwendiges Drehmoment des Fahrwerks erzeugt wird.

Die Sortiervorrichtung eignet sich besonders für eine Anwendung als Bestandteil einer Gepäckbehandlungsanlage, insbesondere in einem Flughafen, für die Sortierung von Gepäcksstücken, und/oder als Bestandteil einer Paketbehandlungsanlage in einem Verteilzentrum für die Sortierung von Paketeinheiten.

Gemäß einer vorteilhaften Ausführung der Erfindung weist die Sortiervorrichtung eine Steuereinheit auf, die dazu vorgesehen ist, abhängig von einem Übergabevorgang die Kupplungseinrichtung zu tätigen. Hierdurch kann auf eine effiziente und präzise Weise die Zeitspanne einer Kupplung der Antriebseinheit mit dem Fahrwerk auf die Durchführung eines Übergabevorgangs abgestimmt werden.

In diesem Zusammenhang wird vorgeschlagen, dass die Steuereinheit dazu vorgesehen ist, nach Abschluss eines Übergabevorgangs eine Kupplung des Fahrwerks mit der Antriebseinheit herzustellen, wodurch eine besonders effiziente Nutzung der zur Verfügung stehenden Antriebsleistung der Antriebseinheit erreicht werden kann. Basierend auf der Erkenntnis, dass die Antriebseinheit einer Transporteinheit herkömmlicherweise während ca. 20% der Betriebszeit der Sortiervorrichtung für Übergabevorgänge eingesetzt wird, kann diese Antriebseinheit vorteilhafterweise während bis zu 80% der Betriebszeit mittels der Kopplung der Antriebseinheit mit dem Fahrwerk für die Fortbewegung der Transporteinheit in Haupttransportrichtung eingesetzt werden.

Die Steuereinheit ist vorteilhafterweise eine mit der Transporteinheit feste Steuereinheit, indem sie mit der Transporteinheit mechanisch fest gekoppelt ist. Hierdurch können kurze Steuerungswege erreicht werden. Zweckmäßigerweise steht die Steuereinheit über ein Datennetzwerk mit einer zentralen, stationären Kontrolleinheit zum Kontrollieren des Stückgutflusses in Wirkverbindung.

In einer vorteilhaften Weiterbildung der Erfindung wird vorgeschlagen, dass die Sortiervorrichtung zumindest eine zweite Transporteinheit zum Transport wenigstens eines Stückguts in der Haupttransportrichtung umfasst, die mit der ersten Transporteinheit mechanisch gekoppelt ist und eine Übergabeeinheit aufweist, die dazu vorgesehen ist, bei einem Übergabevorgang das von ihr transportierte Stückgut in einer von der Haupttransportrichtung abweichenden Übergaberichtung zu bewegen, wobei die der ersten Transporteinheit zugeordnete Steuereinheit dazu wirkt, dass bei einem Übergabevorgang der zweiten Transporteinheit das Fahrwerk der ersten Transporteinheit mit der Antriebseinheit der ersten Transporteinheit gekoppelt ist. Hierdurch kann die Antriebseinheit der ersten Transporteinheit zur Fortbewegung der mit ihr mechanisch gekoppelten zweiten Transporteinheit dienen, insbesondere während diese einen Übergabevorgang ausführt.

In diesem Zusammenhang wird außerdem vorgeschlagen, dass die zweite Transporteinheit ein Fahrwerk für die Bewegung in der Haupttransportrichtung, eine feste Antriebseinheit, die zum Antreiben des von ihr transportierten Stückguts in der Übergaberichtung vorgesehen ist, und eine Kupplungseinrichtung aufweist, die dazu vorgesehen ist, zumindest für eine Zeitspanne das Fahrwerk der zweiten Transporteinheit mit ihrer Antriebseinheit zu koppeln. Hierdurch kann in der Sortiervorrichtung eine vorteilhafte Redundanz im Antrieb der Transporteinheiten in der Haupttransportrichtung erreicht werden.

Weist die Sortiervorrichtung einen Satz bzw. eine Kette von miteinander mechanisch gekoppelten Transporteinheit auf, ist besonders von Vorteil, wenn zumindest ein überwiegender Teil der Transporteinheiten - insbesondere sämtliche Transporteinheiten - mit einem Fahrwerk, einer Übergabeeinheit, einer Antriebseinheit und eine Kopplungseinrichtung, wie oben für die erste Transporteinheit beschrieben, versehen sind.

Ein Ausführungsbeispiel der Erfindung ist anhand der Figuren näher erläutert. Es zeigen:
- Figur 1:: eine Sortiervorrichtung mit einem Satz von Transporteinheiten, die entlang einer Umlaufstrecke gefördert werden und
- Figur 2:: eine Detailansicht von oben einer der Transporteinheiten.

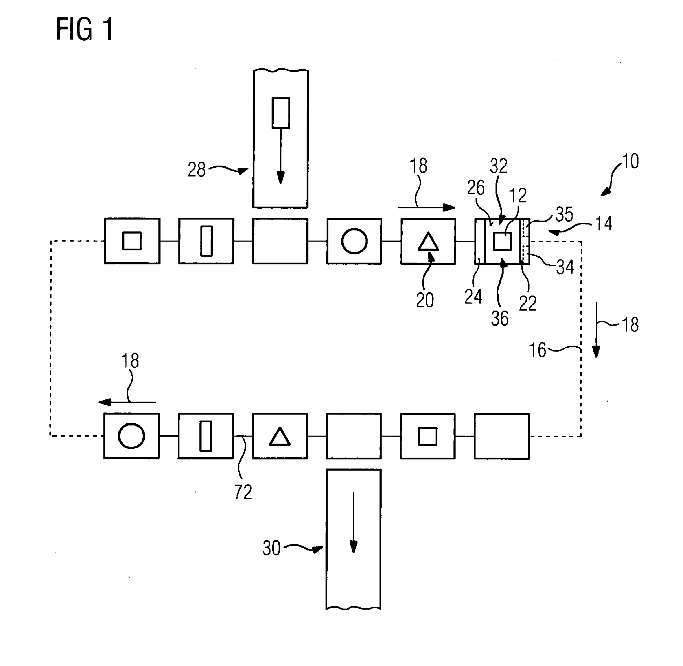

Figur 1 zeigt eine Sortiervorrichtung 10 zum Sortieren von Stückgütern 12 in einer schematischen Ansicht von oben. Im betrachteten Ausführungsbeispiel ist die Sortiervorrichtung 10 als Bestandteil eines Sortier- und Verteilzentrums zum Sortieren von Paketeinheiten ausgebildet.

Die Sortiervorrichtung 10 weist eine Fördereinheit 14 auf, die im vorliegenden Beispiel insbesondere als Rundlaufförderer ausgebildet ist. Diese Fördereinheit 14 fördert hierbei zu sortierende Stückgüter 12 entlang einer geschlossenen Förderstrecke 16. Die Richtung, in welcher die Stückgüter 12 mittels der Fördereinheit 14 entlang der Förderstrecke 16 bewegt werden, wird als Haupttransportrichtung 18 bezeichnet, wobei die in Haupttransportrichtung 18 beförderten Stückgüter 12 einen Stückgutstrom 20 bilden.

Die Fördereinheit 14 umfasst einen Satz von Transporteinheiten 22, die zu einer Bewegung entlang der Förderstrecke 16 angetrieben werden. Die Transporteinheiten 22 sind jeweils mit einer Aufnahmeeinrichtung 24 versehen, die zur Aufnahme von zumindest einem zu sortierenden Stückgut 12 dient. Die Aufnahmeeinrichtung 24 bildet insbesondere eine Transportfläche 26, auf welcher das Stückgut 12 während einer Beförderung entlang der Förderstrecke 16 verbleibt.

Die Sortierung der Stückgüter 12 erfolgt mittels Übergabevorgängen, die an Übergabestationen 28, 30 erfolgen. An der Übergabestation 28 wird ein Stückgut 12 in einem als Einschleusvorgang bezeichneten Übergabevorgang in den Stückgutstrom 20 eingefügt, indem es auf eine Transporteinheit 22 mit freier Transportfläche 26 gefördert wird. An der Übergabestation 30 wird ein von der Fördereinheit 14 befördertes Stückgut 12 in einem als Ausschleusvorgang bezeichneten Übergabevorgang aus dem Stückgutstrom 20 entfernt, indem es von der Transportfläche 26 auf eine Fördertechnik der Übergabestation 30 gefördert wird.

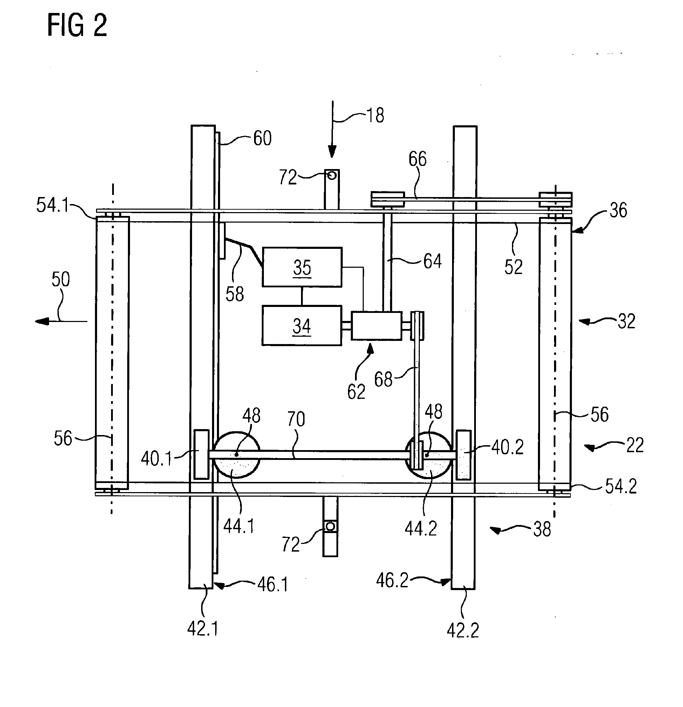

Die Bewegung des Stückguts 12 relativ zum Stückgutstrom 20 bei einem Einschleus- und Ausschleusvorgang erfolgt mittels einer Übergabeeinheit 32, mit welcher jede Transporteinheit 22 versehen ist. Die Übergabeeinheit 32 weist eine z.B. als Elektromotor ausgebildete Antriebseinheit 34 und eine von dieser antreibbare Fördereinrichtung 36 auf, die das zu übergebende Stückgut 12 in einer von der Förderrichtung 18 abweichenden Übergaberichtung 50 bewegt (siehe Figur 2). Zur Steuerung der Antriebseinheit 34 ist der Fördereinrichtung 36 eine Steuereinheit 35 zugeordnet, die beispielsweise als dezentrale Steuereinheit Bestandteil der Transporteinheit 22 ist. In einer alternativen Ausführung kann die Fördereinrichtung 36 von einer zentralen, stationären Steuereinheit gesteuert werden.

Eine der Transporteinheiten 22 ist in Figur 2 in einer Detailansicht näher dargestellt. Für die Bewegung in der Haupttransportrichtung 18 ist die Transporteinheit 22 mit einem Fahrwerk 38 versehen. Dieses weist zumindest zwei antreibbare Wälzkörper 40.1, 40.2 insbesondere in der Form von Antriebsrädern auf, die mit korrespondierenden stationären Schienen 42.1, 42.2 der Förderstrecke 16 zusammenwirken. Das Fahrwerk 38 umfasst außerdem einen Satz von Führungskörpern 44.1, 44.2, die mit entsprechenden stationären Führungselementen 46.1, 46.2 der Förderstrecke 16 korrespondieren. Diese Führungselemente 46.1, 46.2 sind hierbei insbesondere jeweils durch eine von einer der Schienen 42.1, 42.2 gebildete Fläche gebildet. Die Schienen 42.1, 42.2 weisen demnach die Funktion von Führungsschienen auf. Die Führungskörper 44.1, 44.2 sind jeweils als Wälzkörper ausgebildet, welcher eine sich vertikal und senkrecht zur Haupttransportrichtung 18 erstreckende Drehachse 48 aufweist.

Wie oben bereits erwähnt weist die Transporteinheit 22 eine Übergabeeinheit 32 auf, die bei einem Übergabevorgang in Verbindung mit einer Übergabestation 28 bzw. 30 für die Bewegung des Stückguts 12 in der Übergaberichtung 50 eingesetzt wird. Im betrachteten Beispiel ist die Übergaberichtung 50 senkrecht zur Haupttransportrichtung 18 ausgerichtet. Zur Förderung in der Übergaberichtung 50 ist die Übergabeeinheit 32 mit der Fördereinrichtung 36 versehen, die im betrachteten Beispiel ein als Förderband oder Fördergurt ausgebildetes Förderelement 52 aufweist. In der Figur ist das Förderelement 52 der Übersichtlichkeit halber lediglich gestrichelt dargestellt. Zum Bewegen des Förderelements 52 umfasst die Fördereinrichtung 36 ferner ein Paar von parallel zueinander ausgerichteten Rollen 54.1, 54.2, die jeweils eine in Haupttransportrichtung 18 bzw. senkrecht zur Übergaberichtung 50 ausgerichtete, horizontale Drehachse 56 aufweist. Die Rolle 54.2 ist als Antriebsrolle ausgebildet, während die andere Rolle 54.1 eine Laufrolle ist.

Die Fördereinrichtung 36 weist wie oben beschrieben die als Elektromotor ausgebildete Antriebseinheit 34 und die mit dieser in Wirkverbindung stehende Steuereinheit 35 auf. Die Antriebseinheit 34 und die Steuereinheit 35 sind demnach Bestandteile der beweglichen Transporteinheit 22, d.h. sie sind mit einem Grundkörper derselben mechanisch fest, insbesondere starr gekoppelt. Die Antriebseinheit 34 bezieht, insbesondere über die Steuereinheit 35, eine für ihren Antrieb notwendige Antriebsenergie mittels eines Stromabnehmers 58, der im Eingriff mit einer stationären Stromschiene 60 der Strecke 16 steht.

Die Transporteinheit 22 ist ferner mit einer Kupplungseinrichtung 62 versehen, die der Antriebseinheit 34 - in Bezug auf den Antriebsstrang - nachgeschaltet, insbesondere direkt nachgeschaltet ist. Diese ist als eine Wechselkupplung ausgebildet, die - in einer ersten Betriebsstellung - eine Kupplung der Antriebseinheit 34 mit der Fördereinrichtung 36, insbesondere mit ihrer Antriebsrolle 54.2, herstellt und - in einer zweiten Betriebsstellung - eine Kupplung der Antriebseinheit 34 mit dem Fahrwerk 38 herstellt. Insbesondere kann die Wechselkupplung als elektromechanische Wechselkupplung ausgebildet sein.

Die erste Betriebsstellung der Kupplungseinrichtung 62 wird mittels der Steuereinheit 35 bei einem Übergabevorgang eingestellt. Die Antriebsenergie der Antriebseinheit 35 wird über weitere Antriebselemente 64, 66 an zumindest eine der Rollen 54, und zwar insbesondere an die Antriebsrolle 54.2 übertragen. Im betrachteten Ausführungsbeispiel sind die Antriebselemente 64, 66 als Antriebsachse bzw. als Antriebsriemen ausgebildet. Die Antriebsenergie wird in dieser Betriebsstellung der Kupplungseinrichtung 62 zum Antreiben der Fördereinrichtung 36 genutzt, durch welche das von der Transporteinheit 22 transportierte Stückgut 12 in Übergaberichtung 50 bewegt wird.

Nach Abschluss des Übergabevorgangs steht die Antriebseinheit 34 für die Fortbewegung der Transporteinheit 22 zur Verfügung. Hierzu stellt die Steuereinheit 35 die Kupplungseinrichtung 62 in die zweite Betriebsstellung ein, in welcher die Antriebseinheit 34 mit dem Fahrwerk 38 antriebstechnisch gekoppelt ist. Dies erfolgt mittels eines Antriebselements 68, welches mit einer die Wälzkörper 40.1, 40.2 verbindenden Antriebsachse 70 gekoppelt ist. Im betrachteten Beispiel ist das Antriebselement 68 als Antriebsriemen ausgebildet.

Weitere Transporteinheiten 22 - die entweder einen Teil des Satzes von Transporteinheiten 22 oder vorteilhaft den ganzen Satz von Transporteinheiten 22 der Fördereinheit 14 bilden - sind im Wesentlichen, gemäß der obigen Beschreibung identisch zur Transporteinheit 22 ausgebildet. Diese Transporteinheiten 22 verfügen hierbei jeweils zumindest über ein Fahrwerk, eine Übergabeeinheit, eine Antriebseinheit, eine Steuereinheit und eine Kupplungseinrichtung, mittels welcher die lokale Antriebseinheit mit dem Fahrwerk gekoppelt werden kann, wie oben beschrieben.

Die Vereinung aller Antriebseinheiten 34 der Fördereinheit 14 bildet einen Antrieb, welcher eine hohe Redundanz aufweist. Auch im Ausfall einer Antriebseinheit 34 kann der Betrieb der Fördereinheit 14 mit einer im Wesentlichen gleichen Leistung fortgesetzt werden.

Dies gilt auch für den Fall, in dem ein Übergabevorgang mit einer oder mehreren der Transporteinheiten 22 erfolgt. Während des Übergabevorgangs einer Transporteinheit 22 ist wie oben beschrieben die entsprechende Antriebseinheit 34 dieser Transporteinheit 22 mit ihrer Fördereinrichtung 36 antriebstechnisch gekoppelt, wodurch die Antriebsenergie der Antriebseinheit 34 nicht zur Fortbewegung der Transporteinheit 22 benutzt wird. Dieser Fortbewegungsantrieb erfolgt jedoch über weitere, mit dieser Transporteinheit 22 mechanisch gekoppelte Transporteinheiten 22, deren Antriebseinheit 34 jeweils mit dem lokalen Fahrwerk 38 gekoppelt ist: Wird bei einer ersten ten Transporteinheit 22 die Antriebseinheit 34 mit dem Fahrwerk 38 koppelt.

Eine Antriebseinheit 34 kann - in der zweiten Betriebsstellung von ihrer Kupplungseinrichtung 62 - demnach nicht nur zur Fortbewegung ihrer zugeordneten Transporteinheit 22 dienen, sondern sie kann auch zur Fortbewegung weiterer Transporteinheiten 22 beitragen. Dies gilt insbesondere für die direkt benachbarten Transporteinheiten 22, die mit der gezeigten Transporteinheit 22 der Figur 2 mittels mechanischer Kopplungen 72 gekoppelt sind. Durch diese Kopplungen 72 bildet der Satz von Transporteinheiten 22 der Fördereinheit 14 eine Kette bzw. einen Zug von Transporteinheiten 22, welche bzw. welcher sich entlang der Förderstrecke 16 bewegt.

## Patentansprüche

1. Sortiervorrichtung zum Sortieren von Stückgütern (12), mit zumindest einer ersten beweglichen Transporteinheit (22) zum Transport wenigstens eines Stückguts (12) in einer Haupttransportrichtung (18), wobei die erste Transporteinheit (22) ein Fahrwerk (38) für die Bewegung in der Haupttransportrichtung (18), eine Übergabeeinheit (32), die dazu vorgesehen ist, bei einem Übergabevorgang das Stückgut (12) in einer von der Haupttransportrichtung (18) abweichenden Übergaberichtung (50) zu bewegen, und eine mit der ersten Transporteinheit (22) festen Antriebseinheit (34) aufweist, die zum Antreiben des Stückguts (12) in der Übergaberichtung (50) vorgesehen ist,
**gekennzeichnet durch**
eine Kupplungseinrichtung (62), die dazu vorgesehen ist, zumindest für eine Zeitspanne das Fahrwerk (38) mit der Antriebseinheit (34) zu koppeln.

2. Sortiervorrichtung nach Anspruch 1,
**gekennzeichnet durch**
eine Steuereinheit (35), die dazu vorgesehen ist, abhängig von einem Übergabevorgang die Kupplungseinrichtung (62) zu tätigen.

3. Sortiervorrichtung nach Anspruch 2,
**dadurch gekennzeichnet, dass**
die Steuereinheit (35) dazu vorgesehen ist, nach Abschluss eines Übergabevorgangs eine Kupplung des Fahrwerks (38) mit der Antriebseinheit (34) herzustellen.

4. Sortiervorrichtung nach Anspruch 2 oder 3,
**dadurch gekennzeichnet, dass**
die Steuereinheit (35) mit der Transporteinheit (22) mechanisch fest gekoppelt ist.

5. Sortiervorrichtung nach einem der Ansprüche 2 bis 4, **gekennzeichnet durch**
zumindest eine zweite Transporteinheit zum Transport wenigstens eines Stückguts (12) in der Haupttransportrichtung (18), die mit der ersten Transporteinheit (22) mechanisch gekoppelt ist und eine Übergabeeinheit aufweist, die dazu vorgesehen ist, bei einem Übergabevorgang das von ihr transportierte Stückgut (12) in einer von der Haupttransportrichtung (18) abweichenden Übergaberichtung zu bewegen, wobei die der ersten Transporteinheit (22) zugeordnete Steuereinheit (35) dazu wirkt, dass bei einem Übergabevorgang der zweiten Transporteinheit das Fahrwerk (38) der ersten Transporteinheit (22) mit der Antriebseinheit (34) der ersten Transporteinheit (22) gekoppelt ist.

6. Sortiervorrichtung nach Anspruch 5,
**dadurch gekennzeichnet, dass**
die zweite Transporteinheit ein Fahrwerk für die Bewegung in der Haupttransportrichtung (18), eine feste Antriebseinheit, die zum Antreiben des von ihr transportierten Stückguts in der Übergaberichtung vorgesehen ist, und eine Kupplungseinrichtung aufweist, die dazu vorgesehen ist, zumindest für eine Zeitspanne das Fahrwerk der zweiten Transporteinheit mit ihrer Antriebseinheit zu koppeln.

## Claims

1. Sorting apparatus for sorting individual items (12), having at least a first movable transport unit (22) for transporting at least one individual item (12) in a main transport direction (18), the first transport unit (22) having a chassis (38) for movement in the main transport direction (18), a transfer unit (32), which is provided for moving the individual item (12) in a transfer direction (50), which differs from the main transport direction (18), during a transfer operation, and a drive unit (34), which is fixed to the first transport unit (22) and is provided for driving the individual item (12) in the transfer direction (50),
**characterised by**
a coupling facility (62), which is provided for the purpose of coupling the chassis (38) to the drive unit (34) at least for a period of time.

2. Sorting apparatus according to claim 1,
**characterised by**
a control unit (35), which is provided to activate the coupling facility (62) as a function of a transfer operation.

3. Sorting apparatus according to claim 2,
**characterised in that**
the control unit (35) is provided to establish coupling of the chassis (38) to the drive unit (34) on completion of a transfer operation.

4. Sorting apparatus according to claim 2 or 3,
**characterised in that**
the control unit (35) is coupled in a mechanically fixed manner to the transport unit (22).

5. Sorting apparatus according to one of claims 2 to 4,
**characterised by**
at least a second transport unit for transporting at least one individual item (12) in the main transport direction (18), which is coupled mechanically to the first transport unit (22) and has a transfer unit, which is provided to move the individual item (12) it is transporting in a transfer direction, which differs from the main transport direction (18), during a transfer operation, the control unit (35) assigned to the first transport unit (22) causing the chassis (38) of the first transport unit (22) to be coupled to the drive unit (34) of the first transport unit (22) during a transfer operation of the second transport unit.

6. Sorting apparatus according to claim 5,
**characterised in that**
the second transport unit has a chassis for movement in the main transport direction (18), a fixed drive unit, which is provided for driving the individual item it transports in the transfer direction, and a coupling facility, which is provided for the purpose of coupling the chassis of the second transport unit to its drive unit at least for a period of time.

## Revendications

1. Dispositif de tri destiné à trier des marchandises en colis (12), comprenant au moins une première unité de transport déplaçable (22) pour le transport au moins d'une marchandise en colis (12) dans un sens de transport principal (18), la première unité de transport (22) présentant un mécanisme de déplacement (38) pour le déplacement dans le sens de transport principal (18), une unité de transfert (32) qui est ménagée, lors d'une opération de transfert, pour déplacer la marchandise en colis dans un sens de transfert (50) différent du sens de transport principal (18), et une unité d'entraînement (34) fixe avec la première unité de transport (22), laquelle unité d'entraînement est ménagée pour entraîner la marchandise en colis (12) dans le sens de transfert (50),
**caractérisé par**
un dispositif d'accouplement (62) qui est ménagé pour accoupler le mécanisme de déplacement (38) à l'unité d'entraînement (34) au moins pour un intervalle de temps.

2. Dispositif de tri selon la revendication 1,
**caractérisé par**
une unité de commande (35) qui est ménagée pour commander le dispositif d'accouplement (62) en fonction d'une opération de transfert.

3. Dispositif de tri selon la revendication 2,
**caractérisé en ce que**
l'unité de commande (35) est ménagée pour établir un accouplement du mécanisme de déplacement (38) à l'unité d'entraînement (34) après l'achèvement d'une opération de transfert.

4. Dispositif de tri selon la revendication 2 ou 3,
**caractérisé en ce que**
l'unité de commande (35) est accouplée de manière mécaniquement fixe à l'unité de transport (22).

5. Dispositif de tri selon l'une quelconque des revendications 2 à 4,
**caractérisé par**
au moins une deuxième unité de transport destinée au transport au moins d'une marchandise en colis (12) dans le sens de transport principal (18), laquelle est mécaniquement accouplée à la première unité de transport (22) et présente une unité de transfert qui est ménagée, lors d'une opération de transfert, pour déplacer la marchandise en colis (12) transportée par elle dans un sens de transfert différent du sens de transfert principal (18), l'unité de commande (35) attribuée à la première unité de transport (22) ayant pour effet que lors d'une opération de transfert de la deuxième unité de transport, le mécanisme de déplacement (38) de la première unité de transport (22) est accouplé à l'unité d'entraînement (34) de la première unité de transport (22).

6. Dispositif de tri selon la revendication 5,
**caractérisé en ce que**
la deuxième unité de transport présente un mécanisme de déplacement pour le déplacement dans le sens de transport principal (18), une unité d'entraînement fixe, qui est ménagée pour entraîner la marchandise en colis transportée par elle dans le sens de transfert, et un dispositif d'accouplement qui est ménagé pour accoupler le mécanisme de déplacement de la deuxième unité de transport à son unité d'entraînement au moins pour un intervalle de temps.
